Europäisches Patentamt

European Patent Office

Office européen des brevets

(19)

(11) **EP 1 703 464 A1**

(12) # EUROPEAN PATENT APPLICATION

(43) Date of publication:
**20.09.2006 Bulletin 2006/38**

(51) Int Cl.:
***G06T 7/00*** (2006.01)

(21) Application number: **05290596.5**

(22) Date of filing: **17.03.2005**

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU**<br><br>(71) Applicant: **Institut Curie**<br>**75248 Paris Cedex 05 (FR)** | (72) Inventor: **Novikov, Eugène**<br>**94240 L'Haye-Les-Roses (FR)**<br><br>(74) Representative: **Blot, Philippe Robert Emile et al**<br>**Cabinet Lavoix**<br>**2, place d'Estienne d'Orves**<br>**75441 Paris Cedex 09 (FR)** |

(54) **Method for analyzing an image of a biochip, computer program and device for analyzing this image**

(57)     The invention relates to a method for analyzing an image (4) made of an array of pixels having an intensity in at least the first and the second color channels, some pixels of the image (4) having a high intensity and being grouped together to form spots (7, 8, 9), the other pixels of the image having a low intensity reflecting the background of the image.

The method comprises the step of positioning grids (6) partitioned into cells (16) on the image (4) in such a way that each spot (7, 8, 9) is localized in one cell (16) and determining a color distribution approximation function depending on at least a characteristic value of the intensities of the first color channel and a characteristic value of the intensities of the second color channel.

The invention also relates to a computer program and a device for analyzing this image.

FIG.3

EP 1 703 464 A1

**Description**

The invention relates to a method for analyzing an image.

In particular, the invention relates to a method for analyzing an image made of an array of pixels having an intensity in at least two color channels, some pixels of the image having a high intensity and being grouped together to form spots, the other pixels of the image having a low intensity reflecting the background of the image.

Biochips (or microarrays) represent high-performance tools for the parallel analysis of a large number of nucleid acid sequences.

An experimental design, widely used in both CGH (comparative genome hybridization) (Pinkel et al., Nature, 1998, Genetics, 20, 207-211) and cDNA (Hedge et al., Biotechniques, 2000, 29, 548-562.) microarray technologies, is based on comparison of gene expression in the test and control samples.

To perform such an experiment, two compared samples are labeled using different fluorescent moieties (such as the red-fluorescent Cy5 and the green-fluorescent Cy3), mixed up and contacted with the target nucleic acid (e.g. cDNA clones, RNA, etc) regularly spotted on the microarray.

In situ hybridization is detected by scanning the microarray with high spatial resolution at the correspondent fluorescent wavelengths, and at each scanned image the fluorescence intensities are recorded in one color channel.

Two images, one image corresponds to the sample labeled with the red-fluorescent Cy5 dye, and another one corresponds to the sample labeled with green-fluorescent Cy3, are superimposed.

The color distribution approximation function of the color channels of the scanned images, as for example the color ratios of the intensities of these color channels, make up the source of primary information for a chain of the follow-up stages (normalization, clustering, classification, etc), e.g. in the analysis of gene expression data.

Accordingly, it is an object of the invention to provide a method for analyzing images, which method comprises the following steps:

- positioning grids partitioned into cells on the image in such a way that each spot is localized in one cell ; and
- determining a color distribution approximation function depending on the intensities of each color channel and of each spot, the intensities of each color channel being the intensities of the pixels contained in each cell of each grid positioned on the image.

The fluorescent labels are known to the skilled person. They include, but are not limited to, fluorescent lanthanide complexes, including those of Europium and Terbium, fluorescein, rhodamine, tetramethylrhodamine, eosin, erythrosin, coumarin, methyl-coumarins, pyrene, Malacite green, stilbene, Lucifer Yellow, Cascade Blue™, Texas Red, Cy dyes (Cy3, Cy5, etc.), alexa dyes, phycoerythin, bodipy. Cy dyes are preferred.

It is further advisable to develop a method for color distribution approximation function estimation.

Whatever method is used for color distribution approximation function estimation, it suffers from the aberrant pixels presented on practically every array, leading to biased estimates. Therefore it is an object of the invention to develop a method for aberrant pixel filtering (based on linear regression approach), which can be used in combination with any other algorithm for color distribution approximation function estimation, i.e. segmentation or regression.

According to other features, the method comprises the following steps:

- each pixel is characterized by a n-bit byte containing the intensities in each color channel, the step of determining the color distribution approximation function comprising the following successive steps:

  - filtering the cell to exclude aberrant pixels selected according to a selection criteria implementing a distance between the color distribution approximation function and the n-bite byte of each selected pixel ; and
  - determining the color distribution approximation function according to the intensities of each color channel of the filtered cell ;
  - a current intensity distribution being formed by n-bit bytes of the pixels of one cell characterized in that the step of filtering the cell comprises the successive following steps:

    a) selecting at least one n-bit byte of one pixel, in the current intensity distribution according to a predefined selection criteria ;
    b) extracting the selected n-bit byte from the current intensity distribution to build up a candidate intensity distribution ;
    c) estimating a first and a second evaluations of the current and of the candidate intensity distributions, respectively ; and
    d) considering for further processing of the method, either the current intensity distribution or the candidate intensity distribution as the current intensity distribution, according to the first and the second evaluations ;

e) repeating the steps a) - d) until a predetermined stop criterion is fulfilled and considering the current intensity distribution as the result of the filtering step ;

- the predetermined stop criterion is that the current intensity distribution is kept a predefined number of times during the step of considering for further processing of the method ;
- the initial intensity distribution comprises the n-bit bytes of all the pixels of the cell ;
- the step of selecting at least one n-bit byte comprises the step of choosing at least one n-bit byte with a top intensity in at least one of color channels ;
- the step of selecting at least one n-bit byte comprises the step of choosing at least one n-bit byte with the largest distance from the color distribution approximation function of the current intensity distribution ;
- the step of estimating the first and the second evaluations comprise the following steps:

  - calculating a first and a second color distribution approximation function of the current and respectively the candidate intensity distributions ; and
  - calculating a first and a second residual variances of the first and of the second color distribution approximation function as result of the first and the second evaluations ;
- the step of considering the current intensity distribution or the candidate intensity distribution comprises the following steps :

  - calculating a ratio of the first and of the second residual variances ; and
  - comparing the calculated ratio to a predefined critical value, and if this ratio is smaller than a critical value, the candidate intensity distribution is considered as the current intensity distribution ;
- the n-bite byte of each pixel contains the intensities in a first and in a second color channels, the step of determining the color distribution approximation function comprises a step of determining a color ratio between a characteristic value of the intensities of the first and of the second color channels of each pixel of the cell, the first and the second color distribution approximation function being a first and a second linear regression lines of the current and the candidate intensity distributions, respectively ;
- when applied to the analyzing of an image built up by the superimposition of at least a first and a second images of biochips on which nucleic acid hybridization has occurred, the hybridization being detectable by at least a first and a second fluorescent labels that emit in a first and a second color channels respectively, each spot reflecting the nucleic acid hybridization ;
- shifting at least the first image with respect to the second image to obtain the largest correlation between a predefined number of selected spots of the first and of the second image.

It is also advisable to develop a spot localization method likely to process images of different designs with less user contribution.

The microarray image built up by the superimposure of the scanned images comprises a collection of bright spots distributed over the image according to a special pattern or design.

The intensity of light at each of these spots is proportional to the hybridization level with the target nucleic acid on the biochip. Depending on the experiment that is carried out, expression level of a spotted gene or cDNA clone can then be assessed.

To analyze the built up images, the spots have to be localized firstly to identify the position of each spot on the array so that the name of the spotted nucleic acid (e.g. cDNA clone) can be associated with the corresponding spot and secondly to establish borders between the neighborhood spots with a view to letting one extract quantitative information for each spot independently of the other neighborhood spots.

This spot localization consists in the generation of grids adapted to cover a microarray image in such a way that each group of spots or pattern of spots, is positioned into a grid and each spot is positioned in a cell of a grid. This grid generation can in principle be done manually, by an operant.

However, proper automation of this step is very essential, since fast and reliable localization increases overall performance of the analysis that is especially critical in high-throughput applications. Automation also leads to higher level of reproducibility of the results.

Tools for generating grids over microarray image are well known. However, most of them require either direct user participation or prior knowledge of some image-specific parameters, like, for example, spot diameter, inter-spot distance, position of certain "anchor" spots on the array, etc. Unpredictable departures from the assumed array design, high levels of contamination or low gene expression rates may lead to further complications in the localization analysis.

Therefore, to solve the technical problem of localize spots distributed according to different designs with less user contribution, it is an object of the invention to provide a method for positioning grids in such a way that the array of pixels is distributed according to columns and rows, the image comprising patterns of sports, characterized in that the step of positioning grids comprising the following steps:

- positioning grid on each pattern and positioning columns and rows in each grid to delimit cells in such a way that each grid contains the spots of one pattern and each spot of one pattern is in a cell of the associated grid ; and
- calculating for each row and column of pixels, a regularity curve (R (L, s)) representing the fluctuation of the intensity weighted by the amount of regularity in this row, and respectively in this column, the regularity curve depending on the distance separating two adjacent spots and on an intensity level (L) of the image.

Other features and advantages of the method are:

- the positioning step comprises a step of determining the intensity level of each row and of each column which maximizes the regularity curve.
- the positioning step comprises the following steps :

- considering an initial predetermined interdistance as current interdistance ;
- partitioning the image into blocks, each block comprising a pattern of spots by computing the regularity curve for the image for a current interdistance ;
- estimating the interdistance between pairs of adjacent spots of each block by computing the regularity curve of each block for the current interdistance ;
- repeating a predetermined number of times the steps of partitioning the image and estimating the interdistance by
- calculating the median value of the estimated interdistances, and by
- considering the median value as the current interdistance ; and
- considering the final interdistance of each block as the current interdistance after the predetermined number of times.
- the step of estimating the interdistances for each block comprises the following steps:

- setting a set of potential regularity levels ;
- for each potential regularity levels ;

- calculating refined values of interdistance ;
- shifting the regularity curve by each refined value of the interdistance,
- adding the regularity curve to each shifted regularity curve to constitute blurred regularity profiles ; and

- selecting among the potential regularity levels, the optimal regularity level as the regularity level ensuring the largest number of regions of the blurred regularity profile, having a regularity lower than the corresponding regularity level set ; and
- calculating the interdistances for this block for this optimal regularity levels.

In addition, the invention relates to a computer program for a processing unit comprising a set of instructions which, when loaded into said processing unit, causes the processing unit to carry out the steps of the method as claimed in any of the claims 1 to 16.

Furthermore, the invention relates to a device adapted to analyze images made of an array of pixels, characterized in that it comprises a processing unit adapted to carry out the steps of the method as claimed in any of the claims 1 to 16.

These and other aspects of the invention will be apparent from the following description and drawings upon which:

- Figure 1 is a microarray image comprising rectangular patterns of spots to localize ;
- Figure 2 is the microarray image of Figure 1, comprising grids generated according to the method of the invention ;
- Figure 3 is a schematic view of a microarray image partitioned into a plurality of blocks ;
- Figure 4 is a flow chart illustrating the main steps of the method according to the invention ;
- Figure 5 is a flow chart illustrating a first estimation step of the distance between two adjacent columns of spots obtained from the analysis of the distribution of spots over the whole image, according to the method of the invention ;
- Figure 6 is a schematic graph illustrating in dashed line, the regularity profile in the X direction $R_x(S_y)$ of the microarray image shown in the inset and in full line, the projection on an X axis, of the pixel intensities of each pixel column of the image shown in the inset;
- Figure 7 is a flow chart illustrating the calculating of the regularity profile according to the method of the invention ;
- Figure 8 is a flow chart illustrating the partitioning steps according to the method of the invention ;
- Figure 9 is a schematic view of a microarray segment extending in the X direction ;

- Figure 10 is a schematic graph illustrating the regularity profile in the X direction $R_{Bx1}(S_y)$ of the microarray segment illustrated on Figure 9 ;
- Figure 11 is a schematic graph representing the regularity profile in the X direction $R_{X30}(sy)$ of the microarray block illustrated on Figure 12 ;
- Figure 12 is a schematic view of a microarray block ;
- Figure 13 is a flow chart illustrating a second estimation step of the distance between two adjacent columns of spots obtained from the analysis of the distribution of spots over each block of the image, according to the method of the invention ;
- Figure 14 is a flow chart illustrating the main steps of the determination of the color ratio step of the method according to the invention ;
- Figure 15 is a flow chart illustrating the step of filtering one cell of the microarray image, according to the method of the invention ;
- Figure 16 is a cell image and a graph illustrating couples characteristic of intensities of each pixel of this illustrated cell in a first color channel with respect to a second color channel ; and
- Figure 17 is two images of one cell and a graph illustrating couples characteristic of intensities of each pixel of the illustrated cell, in a first color channel with respect to a second color channel.

In the described embodiment of the invention, microarray image 4 comprises rectangular spot patterns 2. The localization step of this method aims to localize these patterns.

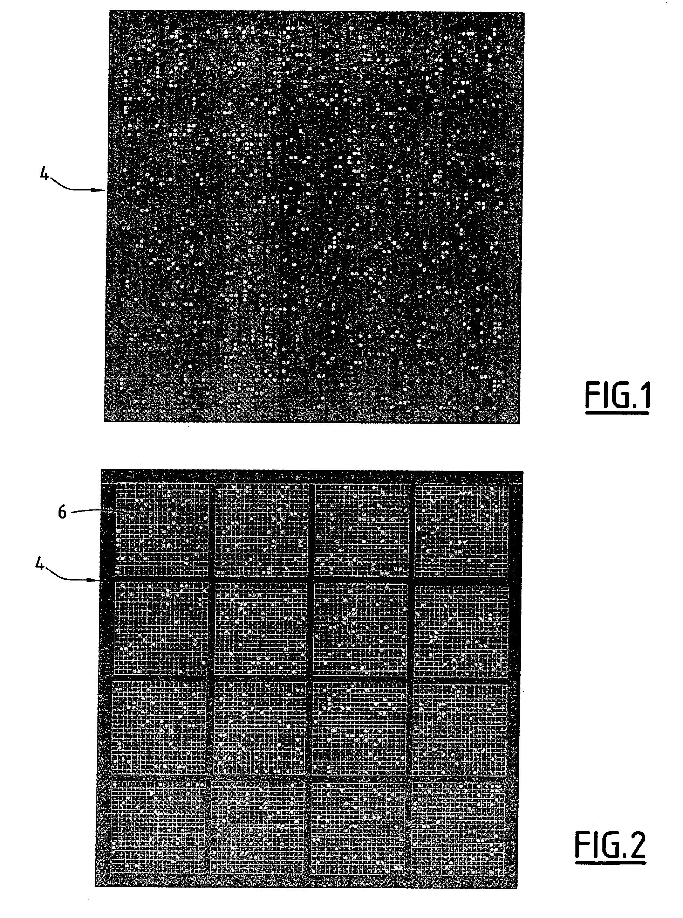

An example of the microarray image 4 comprising such rectangular spot patterns 2 with and without a superimposition of grids 6 is illustrated in Figures 1 and 2, respectively.

In each of these patterns 2, spots 7, 8, 9 are aligned along the horizontal direction, i.e. the X axis, to constitute roughly local spot rows 12, 13 and along the vertical direction, i.e. the Y axis, to constitute local spot columns 14, 15. Spots of each pattern 2 can be arranged in grids 6 where each spot is positioned alone in a cell 16 of one grid 6.

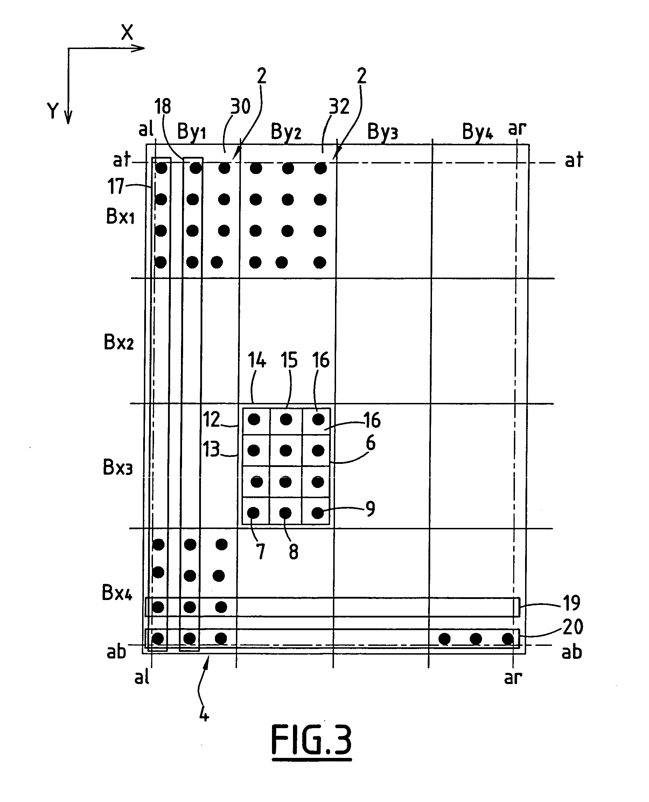

In addition, the spot patterns 2 are distributed over the microarray image, one close to the other so that they make up roughly global rows of spots 19, 20 extending along the width of the image, i.e. the X axis, and global columns of spots 17, 18 extending along the height of the image, i.e. the Y axis, as schematically illustrated in Figure 3.

When using such microarray patterns 2, the structural parameters which are known and which are given as inputs for the processing of the method comprise the number of patterns 2 in rows, i.e. along the X axis, and the number of patterns 2 in columns, i.e. along the Y axis, and the number of spots 7, 8, 9 in rows 12, 13 and columns 14, 15 within each pattern 2.

Conventionally, the microarray image 4 is taken by a camera adapted to transfer the microarray image taken to a computer. The computer is adapted to carry out the steps of the method described when a computer program comprising a set of instructions which implements the process described is loaded into the computer.

To localize each spot, it is necessary to position a cell 16 of a grid around each spot. This localization process is done by measuring the intensity I of each pixel of the microarray image 4, by determining an intensity level L marking out the pixels considered to belong to a spot (bright pixel) from the pixel considered as belonging to the background, and by estimating the positions separating the neighborhood spots.

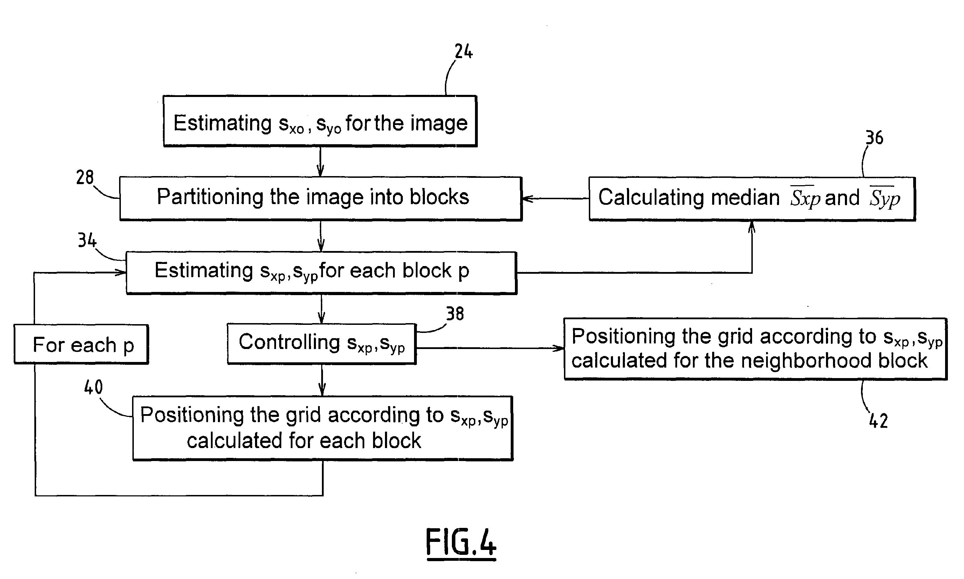

Referring to Figure 4, the step for positioning grids on microarray images 4 according to the invention, begins with a step 24 of a first estimation of the average value for the spot interdistances $s_x$, $s_y$ computed from the processing of the whole image 4.

The spot interdistances $S_x$ and $S_y$ are the distances between two adjacent global columns of spots 17, 18 and respectively the distance between two adjacent global rows of spots 19, 20.

Specifically, the interdistances $s_x$, $s_y$ are the distances between the centers of two adjacent global columns of spots 17, 18 and the distance between the centers of two adjacent global rows of spots 19, 20. Each distance corresponds to the distance separating two column lines (interdistance $s_x$) or two row lines (interdistance $s_y$) of the grid 6 to build up by the positioning step of the method of the invention.

Estimation step 24 is detailed in the following of the description.

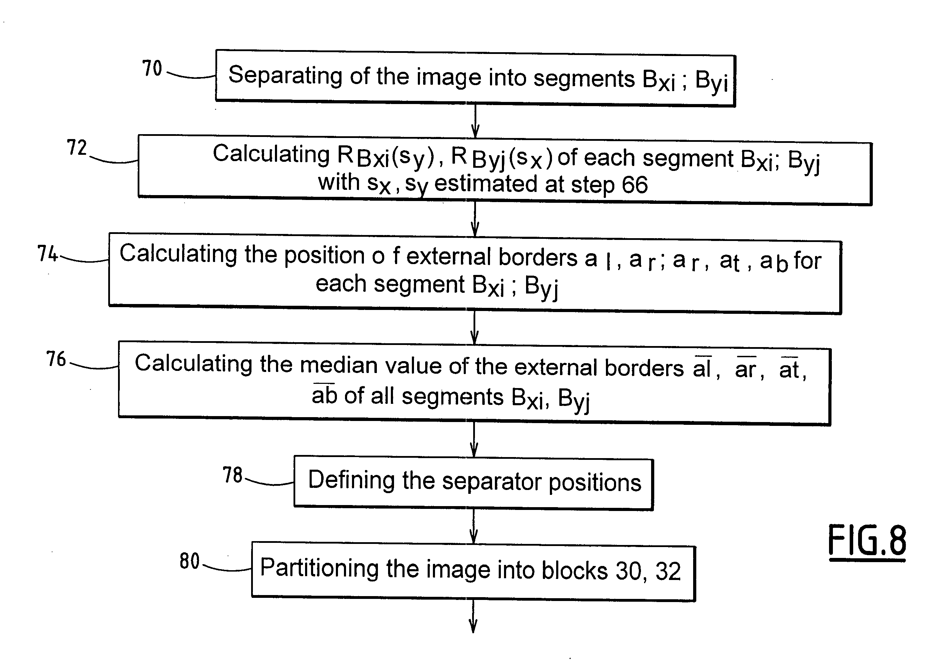

At step 28, the image 4 is partitioned into blocks 30, 32, each comprising one single spot pattern 2. At this end, the interdistances $s_x$, $s_y$ estimated at step 24 are used for the computation of the dimensions of the blocks 30, 32 as explained later in the description in connection with the flow chart of Figure 8.

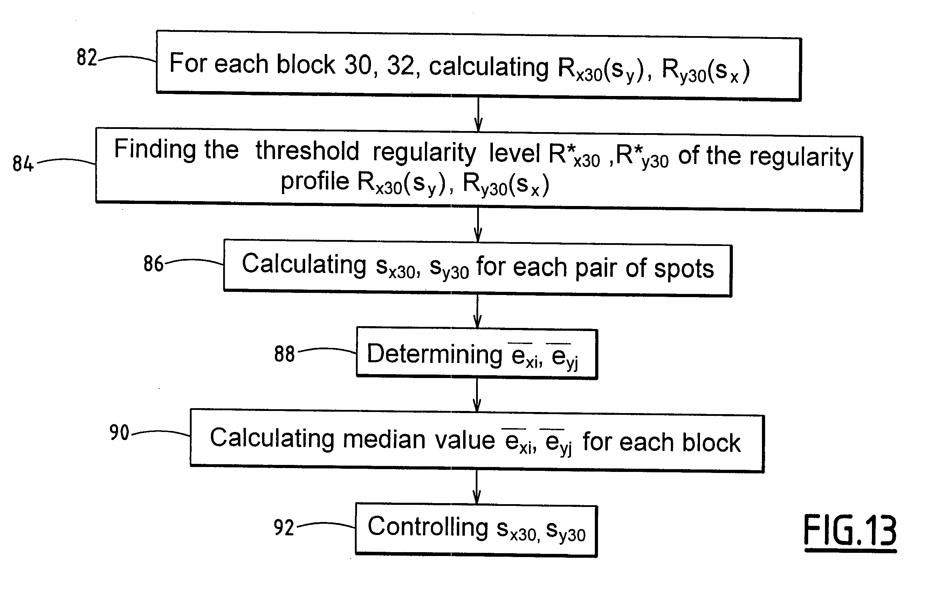

At step 34, second spot interdistances $s_{xp}$, $s_{yp}$ are estimated per each block p = 30, 32. This estimation is computed from the regularity of the distribution of spots 7, 8, 9 over each block 30, 32 of the image 4, as explained in the following of the description in connection with Figure 13.

At step 36, the medians of the spot interdistances $\overline{Sxp}$ and $\overline{Syp}$ of all spots 7, 8, 9 of the image 4 in the x and in the y directions are calculated. The median, well known in statistics, corresponds to the middle value of a series classified in an ascending or a descending order.

The median values $\overline{Sxp}$ and $\overline{Syp}$ of the interdistances obtained by the computing operation during step 36, are used to calculate new values of spot interdistances and are thus reintroduced into the partinioning step 28 , for further computation.

In other words, the determination of the spot interdistances is completed in two iterations. For the first iteration, the spot interdistances $s_x$, $s_y$ are roughly estimated $s_{x0}$, $s_{y0}$. For the second iteration, the spot interdistances issued from the first iteration are used.

At step 38, an additional test is performed to appreciate the consistency of the spot interdistances $S_{xp}$, $S_{yp}$ calculated at step 34 as explained in the following of the description.

If the interdistances $s_{xp}$ and $s_{yp}$ calculated for one block 30 fulfill a grid uniformity condition imposed during the controlling step 38, the horizontal and vertical respectively separator lines of the grid are drawn up according to the interdistances $S_{xp}$, $S_{yp}$ calculated for this spot pattern 2, at a step 40.

Otherwise, the separator lines of the grid are drawn up according to the interdistances $s_{xp}$, $s_{yp}$ calculated for the spot pattern of another block fulfilling the grid uniformity condition, at a step 42.

If several neighborhood blocks possess an uniform grid, the preference will be given to the block closest to the current one.

If it is found, the grid is applied from the neighborhood block to the current block.

If the neighborhood block grids are also not uniform, then a default grid is used.

Grid correction is applied independently for horizontal and vertical grids. For example, if a particular horizontal grid is uniform and a vertical grid is not uniform, only the vertical grid is transported from the neighborhood block situated either at the left or at the right of the tested block, to the tested block.

Steps 34 to 40 are repeated for each block p of the image 4.

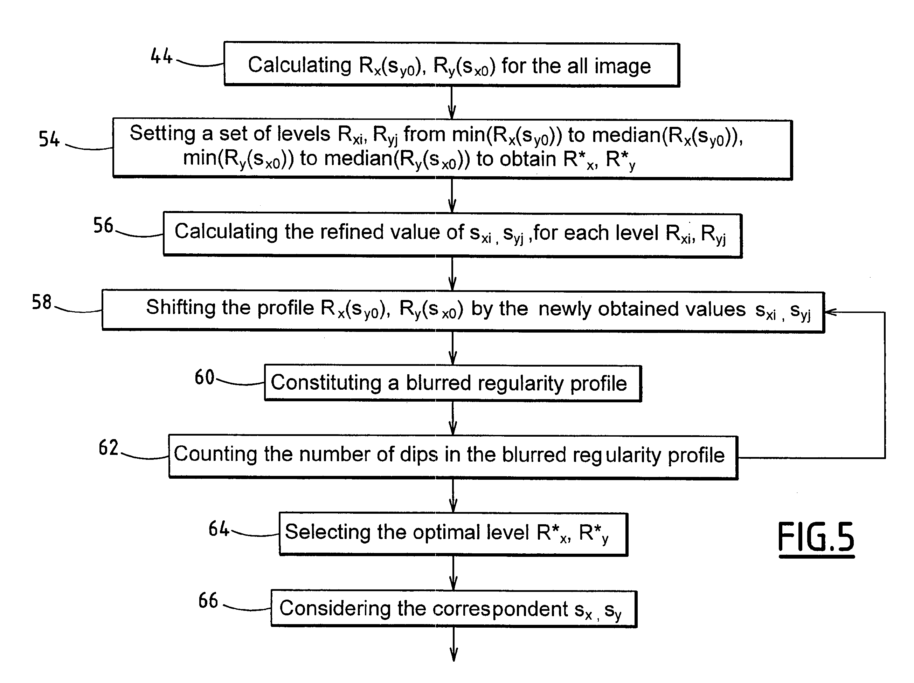

Referring to Figure 5, step 24 of estimation of first spot interdistances $S_x$, sy comprises a step 44 of calculating the regularity profile in the x direction $R_x(S_{yo})$ and the regularity profile in the y direction $R_y(S_{xo})$ for the whole image. The regularity profile of an image or a part of an image in the x direction reflects the fluctuation of the projections of the intensities I of each pixel of a column on the X axis weighted by the amount of regularity along the Y axis in the correspondent column.

Similarly, the regularity profile of an image or a part of an image in the y direction reflects the fluctuation of the projections of the intensities I of each pixel of a row on the Y axis weighted by the amount of regularity along the X axis in the correspondent row.

In other words, the method using regularity profile, transforms fluctuations of the intensity in each pixel row or column of the image into a special parameter taking into account the regularity of these fluctuations.

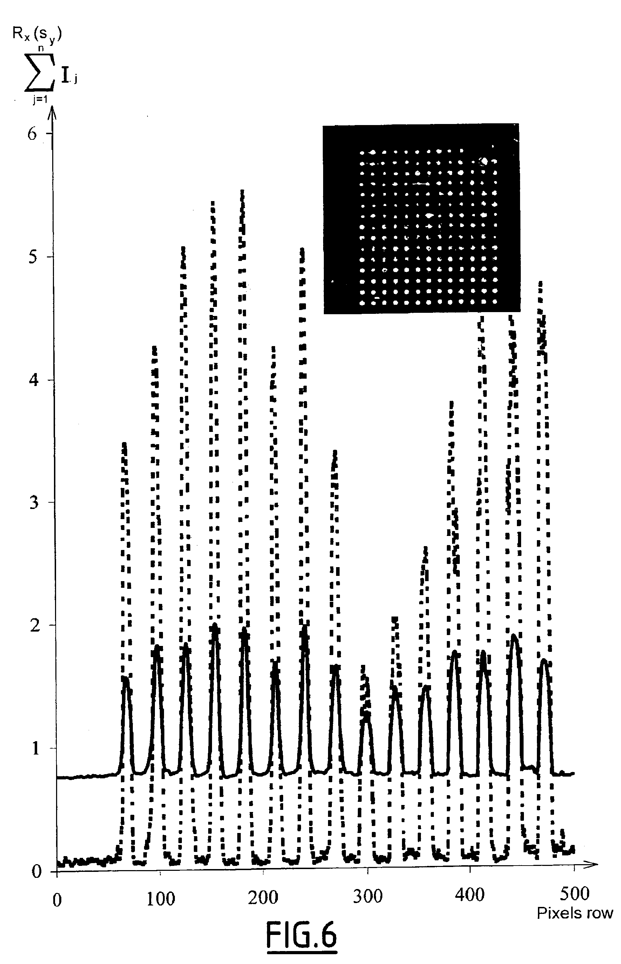

An exemplary regularity profile is shown in Figure 6 for the image shown in the inset. It is composed of a set of regularity parameters computed for each column of pixels of image from the inset.

Each regularity parameter depends on an intensity level $L_{cj}$ ($L_{ri}$) specific for each global column cj (or row ri), on the interdistances $S_x$, sy and on the diameter d of the spots of the image.

Specifically, for each global pixel row or column, a certain intensity threshold L* is selected to isolate continuous regions of pixels with intensities $I_l$ higher than the given threshold (bright regions) from regions of pixels with intensities $I_l$ lower than the given threshold (background regions).

The bright regions are defined by $I_l > L$,

The background regions are defined by $I_l \leq L$, for I=1,...,m, where m is the number of pixels per row or column.

For several intensity levels L defined between an intensity corresponding to the minimal intensity $I_{min}$ of a pixel in a certain pixel column or row and an intensity corresponding to the maximal intensity of a pixel in the corresponding pixel column or row $I_{max}$, a number N(L) of such regions is obtained. Each region n is characterized by its center position $\mu_n(L)$, its length $\lambda_n(L)$, its integral intensity $s_n(L)$ and an integral background B(L).

The projections of the intensities in the pixel columns on the X axis and, correspondingly, the projections of the intensities in the pixel rows on the Y axis, are used to calculate an overall intensity S(L).

The overall intensity S(L) of the selected regions represents the sum of the pixel intensities above a selected level L minus the sum of the pixel intensities under this selected level L.

Practically, it is for example, computed by applying the following equation (2) to the image:

$$S(L)=\sum_{n=1}^{N(L)} s_n(L)-B(L) \, , \, (2)$$

where $s_n(L)$ is the integral intensity calculated in the regions above the threshold L , and
B(L) is the background intensity calculated as an overall intensity in the regions below the threshold L.

This overall intensity S(L) is corrected by the amount of regularity in the corresponding row or column, so that the bright but very irregular regions are systematically penalized to make up the regularity parameter R(L,d,s).

Practically, the regularity parameter R(L,d,s) of each column and row for a given intensity L, a diameter d and an interdistance s is obtained from the following equation:

$$R(L,d,s) = S(L)\exp\left\{-w\left[W_1(L,d) - W_2(L,d) - W_3(L,s)\right]\right\}, \quad (1)$$

The weight w sets up the power of regularity coefficients $W_1$, $W_2$, $W_3$. As an example, w can be taken as w = 2. The weight w is a user provided parameter. There is an optimal value for the weight w, for which the method is the most robust.

The regularity coefficients $W_1$, $W_2$, $W_3$ deal with the structure and the regularity of the bright regions (spots).

The first coefficient $W_1$ is used to penalize large deviations of the bright region sizes from the spot diameter d :

$$W_1(L,d) = \sum_{n=1}^{N(L)} \left(\frac{\lambda_n(L)}{d} - 1\right)^2 , \quad (3)$$

The second coefficient $W_2$ is responsible for the spot interdistances $S_x$, $S_y$ that must not be too small, i.e. it should never happen that the centers of two bright regions ($\mu_n(L)$ and $\mu_{n+1}(L)$) approach each other closer than the spot diameter d:

$$W_2(L,d) = \sum_{n=1}^{N(L)-1} \left\{\begin{array}{l} \left(1 - \frac{\mu_{n+1}(L) - \mu_n(L)}{d}\right)^2, \mu_{n+1}(L) - \mu_n(L) < d \\ 0, \mu_{n+1}(L) - \mu_n(L) \geq d \end{array}\right. , \quad (4)$$

Finally, the third coefficient $W_3$ controls the number of bright regions:

$$W_3(L,s) = \left\{\begin{array}{l} \frac{N(L)}{N(s)} - 1, N(L) > N(s) \\ 0, N(L) \leq N(s) \end{array}\right. , \quad (5)$$

where s is either the spot interdistance $s_x$ or $s_y$ and N(s) is the number of spots in the corresponding pixel row or column.

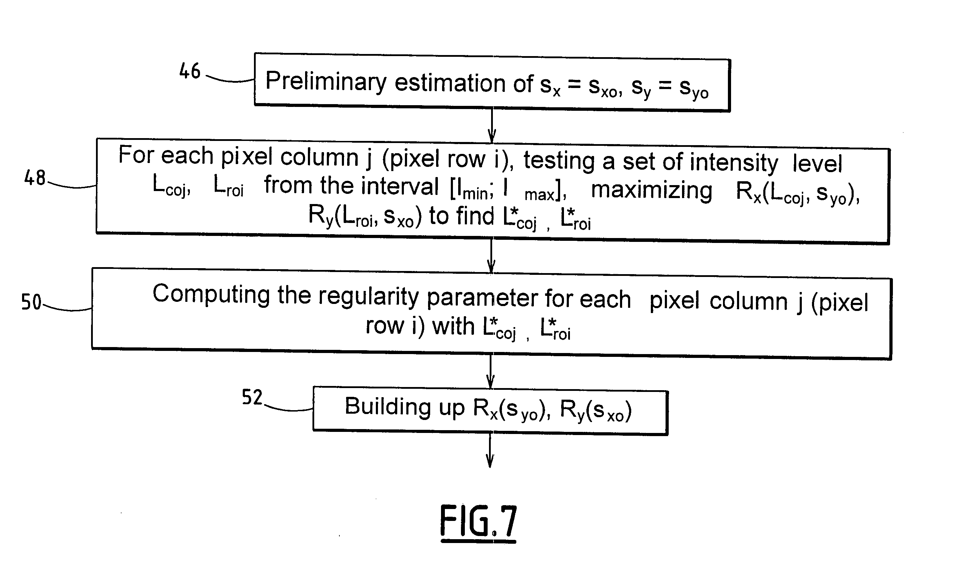

Referring to Figure 7, the step 44 of computing the regularity profiles $R_r$, where r = y for Y direction and r = x for X direction, is detailed.

As stated before, the regularity parameter of each column or row is obtained from the following equation:

$$R(L,d,s) = S(L)\exp\left\{-w\left[W_1(L,d) - W_2(L,d) - W_3(L,s)\right]\right\}, \quad (1)$$

To implement this equation, it is assumed that the diameter of the spots d and the interdistances $s_x$ and $s_y$ are related as $d_k = s_k(1-\alpha)$, where k= x, y and $a_k$ is the user-provided parameter representing the ratio of the inter-spot gap to the spot interdistance. Because of this relation, it would make sense to omit d from the regularity parameter. Therefore, we can replace the regularity parameter *R(L,d,s)* by *R(L,s)*.

As an example, a value of $\alpha$ equal to 0.25 is stable with respect to different array designs and experimental platforms.

Advantageously, this assumption allows d to be different for X and Y directions meaning that spots should not be obligatory of circular shape.

The step 44 of computing the regularity profiles begins with a step 46 of rough estimation of initial interdistances $s_{xo}$, $S_{yo}$.

The initial interdistance $s_{x0}$ is obtained by dividing the number of pixels in the x direction by the number of spots in the x direction, i.e. in the width of the image.

Similarly, the initial estimation of the interdistance $s_{yo}$ is given by dividing the number of pixels in the y direction by the number of spots in the y direction, i.e. in the height of the image.

This is a very rough estimate, but it is already sufficient to build up regularity profiles $R_x(S_{yo}), R_y(S_{xo})$.

At step 48, an intensity threshold level $L^*_{coj}$ and an intensity threshold level $L^*_{roi}$ are chosen for each column j = 1, 2,...,n, and respectively for each row i = 1, 2,...,m to compose the regularity profile in the x direction $R_x(S_{yo})$ and respectively in the y direction $R_y(S_{xo})$.

The intensity threshold levels $L^*_{coj}$, $L^*_{roi}$ are chosen by an optimization procedure which determines the levels $L_{coj}$, $L_{roi}$ within the intervals $[I_{min,j}, I_{max,j}]$, $[I_{min,i}; I_{max,i}]$ which maximizes $R_x(L_{coj}, S_{yo})$, $R_y(L_{roi}, S_{xo})$ :

$$R_x(s_{yo}) = \max_{L_{coj} \in [I_{min,j}; I_{max,j}]} R_x(L_{coj}, s_{yo}) \ , \ (6)$$

$$R_y(s_{xo}) = \max_{L_{roi} \in [I_{min,i}; I_{max,i}]} R_y(L_{roi}, s_{xo}) \ , \ (6)$$

where $I_{min,j}$ being the minimal intensity of a pixel in the j-th pixel column of the image and $I_{max,j}$ being the maximal intensity of a pixel in the j-th pixel column of the image; $I_{min,i}$ being the minimal intensity of a pixel in the i-th pixel row of the image and $I_{max,i}$ being the maximal intensity of a pixel in the i-th row of the image.

The intensity threshold level $L^*_{coj}$ which maximizes $R(L_{coj}, S_{xo})$ is used to calculate the regularity parameter of the pixel column coj considered.

For example, the regularity parameter of the 80th column of pixels is drawn up on the graph of Figure 6, for the 80th pixel of the X axis.

At step 50, a set of regularity parameters each corresponding to each pixel column j and row i, is computed.

At step 52, the computed set of regularity parameters are used to compose the regularity profile in the x direction $(R_x(S_{yo}))$ and in the y direction $(R_y(S_{xo}))$, respectively.

Referring to Figure 5, at step 54, the optimal regularity levels $R^*_x$, $R^*_y$ of the regularity profile $R_x(S_{yo})$, $R_y(S_{xo})$, respectively, are searched. To identify these regularity levels $R^*_x$, $R^*_y$ where the regularity profiles $R_x(S_{yo})$, $R_y(S_{xo})$ are the most regular, a set of regularity levels $R_{xi}$, $R_{yj}$ is tested.

These levels range from minimal regularity parameter: min $(R_x(S_{yo}))$; min $(Ry(S_{xo}))$ to the median regularity parameter: median $(R_x(S_{yo}))$; median $(Ry(S_{xo}))$ of the regularity profile $R_x(S_{yo}), Ry(S_{xo})$.

At step 56, for each regularity level $R_{xi}$, $R_{yj}$, the refined values $s_{xi}$, $S_{xj}$ of the interdistances $S_x$, $s_y$ are calculated as a ratio of the total length of the N(L) $N(R_{xi})$, $N(R_{yj})$ regions where the regularity profile is above the regularity levels $R_{xi}$, $R_{yj}$, to the number of spots in the corresponding axis.

In other words, for each regularity level $R_{xi}$, $R_{yj}$, the interdistances $S_{xi}$, $S_{yj}$ are estimated as a ratio of the number of pixel rows or columns with the regularity higher than each selected level $R_{xi}$, $R_{yj}$ to the total number of spots in the X or Y directions, respectively.

At step 58, the regularity profile is shifted by the newly obtained values of the interdistances $S_{xi}$ $S_{yj}$, for each tested regularity level $R_{xi}$, $R_{yj}$.

At step 60, the shifted profile is added to the original profile to build up a new regularity profile, called blurred regularity profile. In this regard, the regularity parameter of each column or row is added to the regularity parameter of the column or row of the original profile.

Thus, the blurring profile is done by superimposing the given profile with itself shifted to the right or to the left by a number of pixels equal to the number of pixels of the estimated spot interdistances $S_{xi}$, $S_{yj}$.

For the number of pixels set equal to the correct value of the interdistances $S_{xi}$, $S_{yj}$, the complete overlapping of the neighborhood spots is achieved.

Therefore, at step 62, the number of dips, i.e. regions with the regularity lower than the tested regularity levels $R_{xi}$, $R_{yj}$, is counted in each blurred regularity profile, obtained for each regularity level $R_{xi}$, $R_{yj}$.

At step 64, the optimal regularity levels $R^*_x$, $R^*_y$ ensuring the required number of dips, are selected.

Once all spots in the blocks are indistinguishable, the number of dips on the blurred regularity profile should not be larger than the number of blocks plus one.

A smaller number of dips can indicate that neighborhood blocks are also indistinguishable. The optimal levels of regularity $R^*_x$, $R^*_y$ ensuring the largest number of dips (but no larger than the number of blocks plus one in the x and y directions, respectively) are searched and the corresponding interdistances $s_x$, $s_y$ will be considered as final estimates.

If it turns out that the obtained number of dips is larger than the number of blocks plus one for any level of regularity $R^*_x$, $R^*_y$ (and correspondingly for any interdistance $s_x$, $s_y$), then the regularity level $R^*_x$, $R^*_y$ ensuring the lowest number of dips (yet higher than the number of blocks plus one) is selected. This situation is typical for relatively bright contamination presented on the image in the positions where no spots are made according to the array design.

At step 66, the interdistances $S_x$, $S_y$ corresponding to the optimal regularity level are considered as the final estimate of the estimation step 24.

Referring to Figure 8, the sub steps of the partitioning step 28, are illustrated on a flow chart. At step 70, the microarray image 4 is cut into segments $B_{x1}$, $B_{x2}$, ... in the y direction and segments $B_{y1}$, $B_{y2}$, ... in the x direction.

Each segment $B_{x1}$, $B_{x2}$, ... extending in the x direction, has a height equal to the height of the image along the y axis divided by the number of blocks in the y direction.

Each segment $B_{y1}$, $B_{y2}$, ... extending in the y direction has a width equal to the width of the image along the x direction divided by the number of blocks in the x direction.

At step 72, the regularity profile $R_{Bxi}(S_y)$, $R_{Byj}(S_x)$ of each segment in the y direction $B_{x1}$, $B_{x2}$, ... and in the x direction $B_{y1}$, $B_{y2}$, ... is calculated using the same method as the one illustrated by the flow chart of Figure 7.

For each local column 14, 15 of the segment $B_{xi}$, one regularity parameter is calculated with the spot interdistance $S_y$ estimate at step 24 and an intensity threshold level L determined in the same way as during steps 48 to 52.

Regularity profiles $R_{BX1}(S_y)$, $R_{Bx2}(S_y)$, $R_{Bx3}(S_y)$, $R_{By1}(S_x)$, $R_{By2}(S_x)$, $R_{By3}(S_x)$ are calculated for all segments $B_{x1}$, $B_{x2}$, $B_{x3}$ in the x direction and for all segments $B_{y1}$, $B_{y2}$, $B_{y3}$ in the y direction.

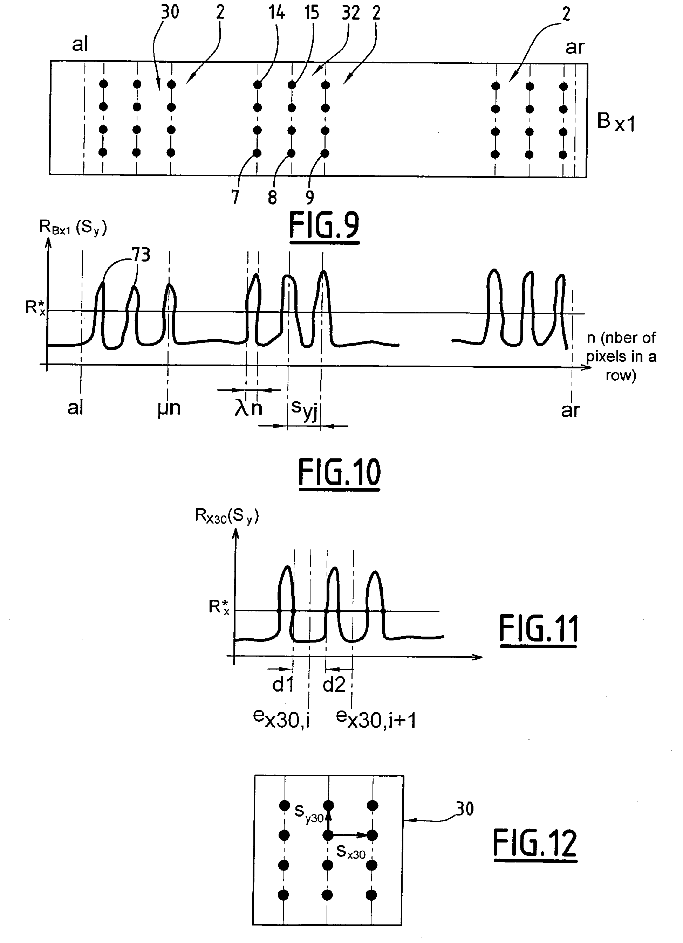

Figure 9 shows the regularity profile $R_{BX1}(S_y)$, of the segment $B_{x1}$.

Each peak 73 of the regularity profile $R_{BX1}(S_y)$, along the x axis represents the existence of a local spot column 14, 15 extending along the height of the segment $B_{x1}$.

Accordingly, there is no peak on the regularity profile $R_{Bx1}(S_y)$, neither along the borders of the segment $B_{x1}$ or between spot patterns 2.

At step 74, the position of the external borders $a_l$, $a_r$ of each segment $B_{xi}$ is determined.

As the external borders $a_l$, $a_r$ do not comprise any spots, they are identified as starting points of the high level origin in the regularity profile.

To exclude high intensities induced by the deposit of a dust on the microarray, a condition is imposed to this first high intensity region.

Under this condition, the region with an intensity above the intensity level L has to be lengthy enough to be considered as the first spot column of the segment

Therefore, it is required that the first high level region is larger than $\beta \times d$ where d is the diameter of the spots and $\beta$ is a user provided parameter characterizing the featuring property on the edge of the image.

The threshold intensity levels in x ($L_x$) and y ($L_y$) directions are calculated as $L_x = b_x + \beta (R^*_x - b_x)$ and $L_y = b_y + \beta (R^*_y - b_y)$, where $R^*_x$, $R^*_y$ are the optimal regularity levels determined at step 64, and $b_x$ and $b_y$ are the background regularity values calculated as medians of the regularity parameters in the regions of one interdistance $s_x$ width (in x direction) and one interdistance $s_y$ height (in y direction) measured from the edges of the image.

The value of $\beta$ depends on the image design. For example $\beta$ is chosen between 0.2 and 0.5.

The position of the external borders at, $a_b$ is similarly determined for all segments $B_{y1}$, $B_{y2}$, $B_{y3}$ in the y direction.

At step 76, the median values of the external borders $\overline{al}$ , , $\overline{ar}$ of the segments $B_{x1}$, $B_{x2}$, $B_{x3}$ are calculated as well as the median values of the external borders $\overline{at}$ , $\overline{ab}$ of the segments $B_{y1}$, $B_{y2}$, $B_{y3}$ in the y direction. These median values are considered to exclude the borders of the image.

At step 78, separator positions are determined to divide the image into blocks 30, 32.

The length of the median value of external borders $\overline{al}$ , , $\overline{ar}$ is subtracted from the width of the image and the resulting length is divided by the number of patterns 2 contained in the width of the image.

The separator positions along the X axis are distributed along the width of the image separating one from the other by the length thus obtained.

Similarly, the length of the median value of external borders $\overline{at}$ , $\overline{ab}$ is subtracted from the height of the image and the resulting length is divided by the number of patterns contained in the height of the image.

The separator positions along the Y axis are distributed along the height of the image separating one from the other by the length thus obtained.

At step 80, the image is partitioned according to the separator positions determined at step 78.

After this partitioning, a number of blocks corresponding to the number of spot patterns 2 is obtained. Such a block 30 is shown in Figure 12.

The step 34 of calculating the second spot interdistances $s_{xp}$, $s_{yp}$ of the block p = 30, is illustrated in Figures 10, 11 and 13.

At step 82, the regularity profile $R_{x30}(S_y)$, $R_{y30}(S_x)$, of the block 3 of the image is calculated. As an example, a schematic regularity profile of the block 30 is shown in Figure 11.

At step 84, the threshold regularity levels $R^*_{x30}$, $R^*y_{30}$ showing the highest regularity of the regularity profiles $R_{x30}(S_y)$, $R_{y30}(S_x)$ are determined.

The regularity levels $R^*_{xi}$, $R^*_{yj}$ maximizing the regularity of the regularity profiles $R_{x30}(S_y)$, $R_{y30}(S_x)$ are chosen by testing a set of regularity levels, as done during step 48 of the method.

These regularity levels range from the minimum regularity parameter $min(R_{x30}(Sy))$, $min(R_{y30}(S_x))$ to the highest regularity parameter $max(R_{x3o}(Sy))$, $max(Ry_{30}(S_x))$.

At step 86, the positions of the block grid lines (i.e. lines separating the adjacent spots) are estimated from the regularity level $R^*_{x30}$, $R^*_{y30}$ calculated for each block 30, 32.

For that, the intersection points $d_1$, $d_2$ of the regularity levels $R^*_{x30}$, $R^*_{y30}$ to the regularity profiles $R_{x30}(S_x)$, $Ry_{30}(s_x)$ are determined, as shown in Figure 11. The middle point $(d_1+d_2)/2$ of the interval $[d_1, d_2]$ is taken as a position of grid line $(e_{x30,l}; e_{x30,i+1})$. The interdistances $S_{x30}$, $Sy_{30}$ of each pair of adjacent spot columns or rows can be determined as differences between two adjacent grid lines, e.g. $S_{x30} = (e_{x30,i+1} - e_{x30,i})$.

The step 38 of controlling the interdistances calculated at step 34, is now detailed.

For each block grid, the distances between two adjacent grid lines $e_{x30,i}$; $e_{x30,i+1}$ are calculated and compared to the median distance between the neighborhood grid lines.

If for a certain block, uniform structure is not ensured, an attempt is made to find a uniform grid 6 among the neighborhood blocks, as explained above at steps 40 and 42.

At step 90, the median value $\overline{e_{xi}}$, $\overline{e_{yi}}$ of the distance between the two adjacent grid lines (or equivalently between two adjacent peaks) $e_{xi}$, $e_{yj}$, is calculated for each block 30, 32, in directions x and y.

At step 92, it is checked if the interdistances $S_{x30}$, $S_{y30}$ calculated during step 34 fulfill the following condition:

$$\overline{e_{xi}} \times (1-\alpha) > s_{x30} > \overline{e_{xi}} \times (1+\alpha)$$

$$\overline{e_{yi}} \times (1-\alpha) > s_{y30} > \overline{e_{yi}} \times (1+\alpha) \quad (8)$$

If the interdistances $s_{ix}$, $s_{yj}$ match the equation 8, the separator lines of the grid are drawn up according to each interdistance $S_{x30}$, $S_{y30}$ calculated for this block .

Otherwise, the separator lines of the grid are drawn up according to the interdistances $S_{x32}$, $S_{y32}$ calculated with the spots of the neighborhood block.

Advantageously, the use of regularity profiles instead of simple intensity profiles lead to better identification of the background regions where one would expect to find a separation between different spot rows or columns.

Indeed, as demonstrated in Figure 6, the regularity profiles in dashed lines ensure a larger dynamical range (signal to background) than the intensity profiles in solid lines.

Advantageously, the localization step of the method is robust with respect to different types of contamination and low gene expression rates.

After the step of positioning grids 6, the spots 7, 8, 9 are identified and well localized, i.e. they are enclosed into cells 16, so that each cell can be processed independently of other cells during a determination the step 96 of the color ratio R.

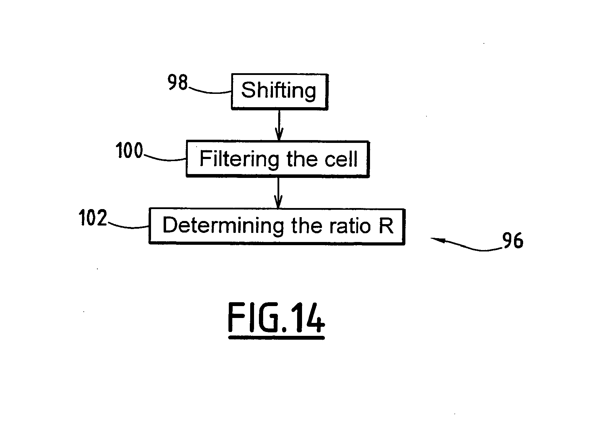

Referring to Figure 14, the determination step 96 of the color distribution approximation function, is illustrated.

In the exemplary described embodiment of the invention, the color distribution approximation function of two original images is determined.

The nucleic acid hybridization occurred on each biochip is highlighted by a fluorescent label that emits in one color channel. Each original image of this biochip comprises pixels having intensities in this color channel.

For example, in described embodiment, the color channels of the two original images are identified as Cy5 and Cy3 color channels in reference to the red Cy5 and the green Cy3 fluorescent dyes used to label the test and the control samples.

The color distribution approximation function is determined for an image 4 built up by the surimposition of the two original images.

Therefore, the color distribution approximation function is a color ratio $R_i$ between a characteristic value of the intensities in the color channel Cy3 of one original image and a characteristic value of the intensities in the color channel Cy5 of the other original image.

Each pixel of the built up image is characterized by a couple of intensities in the color channels Cy3 and Cy5 .

This determination step 96 begins with a step 98 of shifting one original image, for example the image in the Cy3 color channel, with respect to the other original image in the Cy5 color channel.

The purpose of this shifting step 98 is to correct a potential non overlapping of these original images which could decrease the correlation between the two color channels, and leading to an incorrect defining of the color ratio $R_i$ .

During this shifting step 98, one original image is moved with respect to the other one with the aim of obtaining the largest correlation coefficient for a certain number of representative spots 7, 8, 9.

These spots 7, 8, 9 are selected on the basis of two principles: they should be bright enough, but not beyond the dynamical range of the registered intensities, and they should not contain pixels much brighter than the majority of the pixels from the correspondent cell 16.

Only the built up image 4 is considered for the further processing of the invention.

At step 100, a cell 16 of the built up image 4 is filtered. This filtering step 100 is applied independently to each cell 16 of built up image 4.

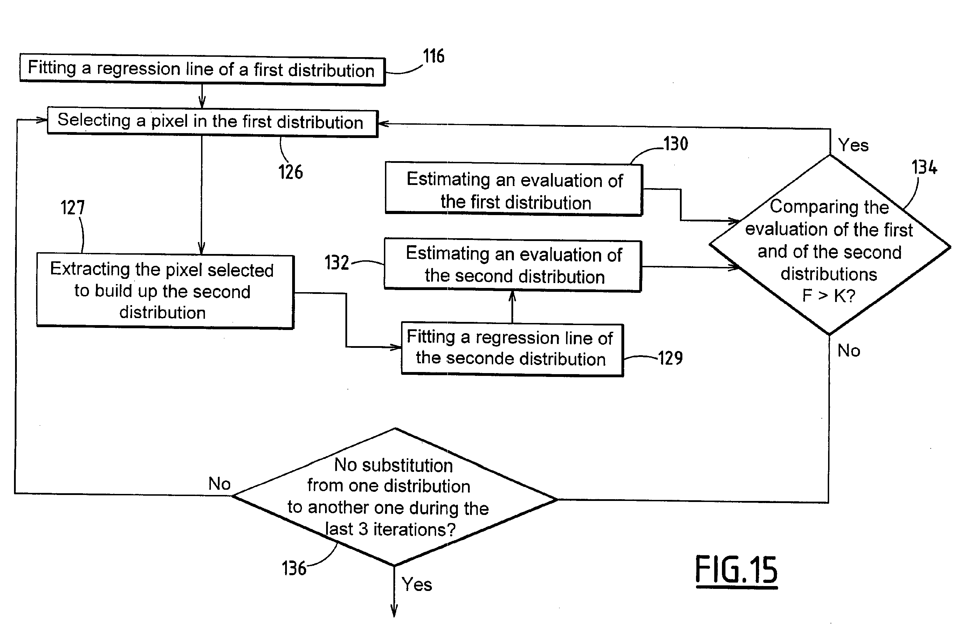

The filtering step 100 is detailed in the following of the description in connection with Figure 15.

At step 102, the color ratio $R_i$ of the filtered cell 16 is determined using a conventional linear regression method.

According to this conventional method, the color ratio $R_i$ of the measured fluorescence intensities in the Cy5 and the Cy3 color channels is defined for each pixel from the cell 16 as:

$$R_i = \frac{S_i^{Cy5} - B_i^{Cy5}}{S_i^{Cy3} - B_i^{Cy3}} , \quad (9)$$

where $S_i^{Cy5}$ and $S_i^{Cy3}$ are the overall fluorescence intensities in the Cy5 and respectively Cy3 color channels, $B_i^{Cy5}$ and $B_i^{Cy3}$ are the background intensities of the i-th pixel, in the Cy5 and respectively the Cy3 color channels.

It is assumed that there is no change in the background intensity within each particular spot area so that: $B_i^{Cy5} = B^{Cy5}$ and $B_i^{Cy3} = B^{Cy3}$ for all pixels from a given cell 16.

In addition, the biologically relevant color ratio $R_i$, reflecting the differential expression between the test and the control samples of each spot 7, 8, 9 is considered to be the same for each pixel from the same spot. As a consequence, $R_i = R$.

According to this assumption, equation (9) is transformed into the following model of linear regression:

$$S_i^{Cy5} = R S_i^{Cy3} + B , \quad (10)$$

where $B = B^{Cy5} - R B^{Cy3}$.

The color ratio R along with the background coefficient B can be obtained from a linear regression fit of the intensities of the pixels from the considered cell 16.

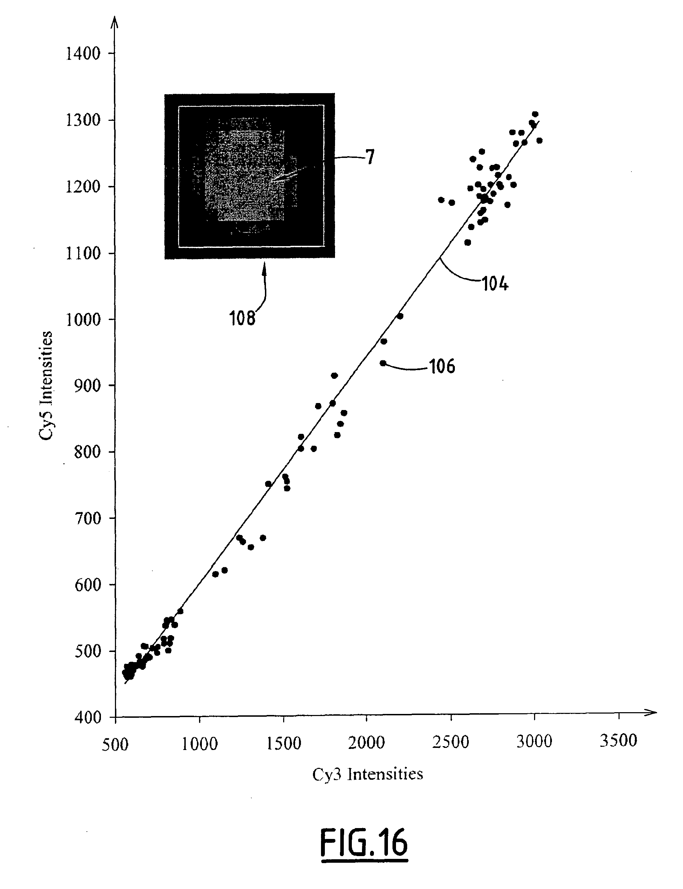

Such a color ratio R is represented on a graph as illustrated in Figure 16.

On this graph, each pixel of the cell 108 is represented by a couple 106 of intensities of this pixel in the Cy3 color channel and in the Cy5 color channel.

The color ratio R is equal to the slope of a linear regression line 104 of the couple 106.

The pixels of the cell 108 with lower intensity in both channels are positioned near the origin of the graph. They represent the background area of the cell 108 and do not influence the slope of the regression line 104.

The pixels with higher intensity correspond to the spot 7 of the cell 108 and are positioned along the line 104.

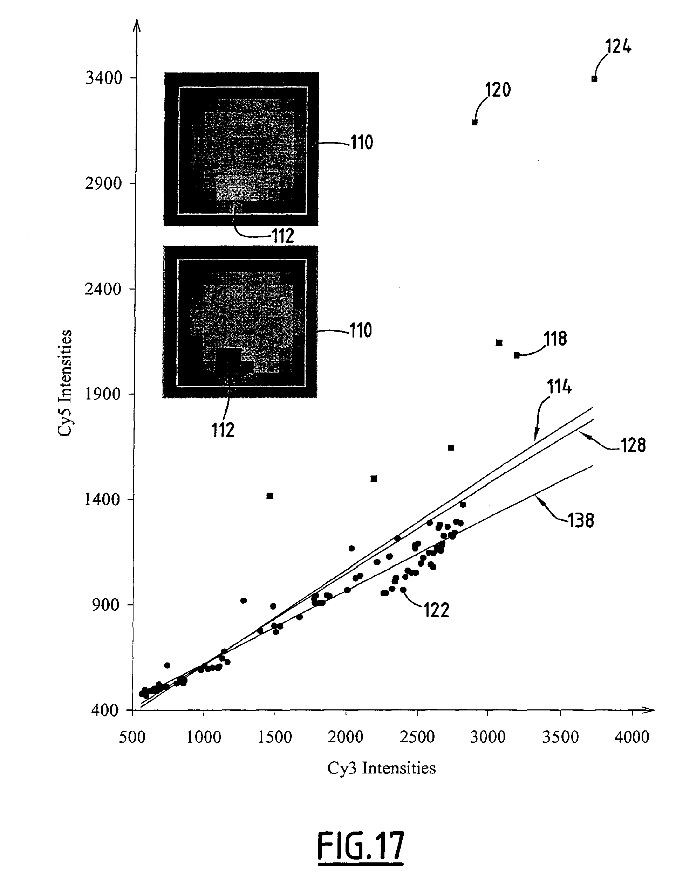

As visible on figure 17, when a cell 110 comprises impurities or dust 112, the slope of the regression line 114 and thus the computed color ratio R does not reflect the real gene expression of the test sample and of the control sample because the presence of impurities 112 usually increases the slope of the regression line 114.

To improve the computing of the color ratio R , the filtering step 100 extracts the pixels of the cell 110 which intensities reflect the presence of impurities 112.

Referring to figure 15, the filtering step 100 begins with a step 116 of fitting a linear regression line 114 of the couples 118, 120, 122, 124 of intensities of all the pixels of the cell 110. These couples of intensities constitute a first distribution of pixel intensities. The parameters R and B of the regression line 14 are estimated.

At step 126, a couple 124 of intensities which may distort the linear regression line 114, is identified. The couple 124 with the largest intensity in the Cy5 color channel is chosen.

At step 127, a second distribution of couples of intensities is built up. This second distribution comprises all the couples of intensities of the first distribution except the couple 124 identified at step 126. The linear regression line 128 of this second distribution is fitted.

At step 129, a regression line of the second distribution is fitted to estimate the parameters R and B for the second distribution.

At step 130, the quality of the linear regression fit 114 of the first distribution is estimated. Therefore, the residual variance $S^2$ of the first distribution of the cell 110 is calculated as:

$$s_n^2 = \frac{1}{n-2} \sum_{i=1}^{n} \frac{\left( S_i^{Cy5} - \hat{R}^n S_i^{Cy3} - \hat{B}^n \right)^2}{1 + \hat{R}^{n^2}} \, ,$$

where n is the total number of pixels in the cell 110 and $\hat{R}^n$ and $\hat{B}^n$ are the n-pixel estimators for $R$ and $B$ correspondingly.

The residual variance $s^2$ is considered as an indicator of the quality of the linear regression line 114. The smaller the residual variance $s^2$ is, the closer is the linear regression line 114 to the couples characteristic of the pixels of the considered distribution.

At step 132, the quality of the linear regression line 128 of the second distribution is estimated. To this end, the residual variance $s_{n-1}^2$ of this regression line 128 is computed as:

$$s_{n-1}^2 = \frac{1}{n-3} \sum_{i=1}^{n-1} \frac{\left( S_i^{Cy5} - \hat{R}^{n-1} S_i^{Cy3} - \hat{B}^{n-1} \right)^2}{1 + \hat{R}^{n-1^2}} \, ,$$

where n-1 is the total number of pixels in the second distribution and $\hat{R}^n$ and $\hat{B}^n$ are the n-1 -pixel estimators for R and B correspondingly.

At step 134, the evaluations of the quality of the first and of the second distribution are compared. To this end, the following F-ratio is composed:

$$F = \frac{s_{n-1}^2}{s_n^2} \, ,$$

which should undergo an F-distribution with n-2 and n-3 degrees of freedom.

If the $F$ -ratio thus obtained is smaller than a user-defined critical value K for a user-defined confidence level of the F-distribution, the second distribution of couples is substituted to the first distribution of couples for further processing of the method.

In this case, the pixel corresponding to the couple 124 selected at step 126, is declared aberrant and is removed from any further calculations. The intensity of this pixel results probably from an impurity which could lead to an improper calculation of the color ratio R.

If the $F$ -ratio is larger than the critical value K, then the first distribution is kept for further processing of the method. In this case, the couple 124 selected at step 126 is a bright pixel of the cell 110 which has to be taken into account for calculation of the color ratio R.

In each case, i.e. the F -ratio smaller or larger than the critical value K, the process starts again at step 126 for a plurality of iterations.

Linear regression fitting has been performed for the second distribution at step 129 to estimate the parameters R and B. After comparison, if a pixel is removed the results from the first distribution are substitute by the results from the second distribution without additional fitting.

The filtering step 100 is completed in at least three iterations and, after each iteration, the obtained distribution of couples is tested at step 134 in order to verify if more pixels have to be excluded from the cell 110 for the computing of the color ratio R.

For the second iteration, the criterion for identifying a pixel likely to correspond to an impurity 112 is changed so that the couple 118 having the largest intensity in the Cy3 color channel is chosen at step 126.

The distribution built up during step 127 of the second iteration comprises the couples of the distribution chosen during step 134 of the first iteration, at the exception of this identified couple 118.

Steps 126 to 134 are performed again during the second iteration of the filtering step 100.

For the third iteration, the criterion for identifying a pixel likely to correspond to an impurity 112 is changed so that the couple 120 of the largest distance from the fitted regression line 128 is chosen as: $\max\limits_{i=1...n}\left(S_i^{Cy5} - \hat{R}S_i^{Cy3} - \hat{B}\right)^2$ .

The distribution built up during step 127 of the third iteration, comprises the couples of the distribution chosen during step 134 of the second iteration, at the exception of this identified couple 120.

After at least three iterations, at step 136, it is checked whether the distribution was unchanged at step 134 during the last three iterations.

If it is the case, the filtering step 100 is stopped because neither of the tested pixels can be further flagged out.

Otherwise, the filtering step 100 proceeds further for a new iteration during which the last non used selecting criteria is applied again during step 126.

Resulting from the filtering step 100, the linear regression line 138 of the filtered cell 110 does not show the same slope as the regression line 114 of the same cell 110 before the filtering step 100.

To take into account the fact that the distortions caused by the pixels from the top of the intensity scale and from the sides of the linear regression plot may be different, different confidence levels for the F-distribution are applied at step 134 for the pixels selected by the criterion of the top intensity in the Cy3 or Cy5 color channels (during the first and second iterations) and by the criterion of the largest distance from the fitted regression line (during the third iteration).

In fact, for the top-intensity pixels in both channels, two outlier tests are performed: one to decide whether they distort the linear regression plot, and the other one to determine how far are their intensities from the average intensities of the other pixels.

The latter test detects those rare pixels, which being very far away from the majority of the other pixels, do not, however, distort the linear regression line because they have not much difference between their intensities in the Cy3 and the Cy5 color channels.

Alternatively, it is possible to improve the filtering step by testing the suspicious pixels not one by one, but in pairs, triples, etc.

Advantageously, the removal of a plurality of pixels improves significantly the quality of the linear regression fit, especially in the cases when aberrations are caused by small pixels clusters. However, this multiple testing will unavoidably lead to significant increase of the processing times of the method.

Alternatively, since the measured fluorescence intensities are statistically distorted in both channels, an orthogonal regression method can be implemented instead of the conventional linear regression method described in the book entitled "The Advanced Theory Of Statistics", Vol. 2, McMillan, New York, Kendall, M.G. and Stuart, A. (1979).

This orthogonal regression method is implemented with the correction proposed in the paper "A critical examination of orthogonal regression" by Dissanaike G. and Wang, S. (2003) available at the following address: http://ssrn.com/abstrac=407560.

Alternatively, three or more images can be analyzed. In such a case, the color distribution approximation function is a function of three or more characteristics of the intensities of three or more color channels. The pixels are characterized by n-bit bytes containing the intensities in each color channel. The step of filtering comprises a step of comparing each n-bit byte to a regression profited in three or more dimensions.

According to this invention, the step of positioning grids and the step of determining a color distribution approximation function R can be implemented independently one from the other.

Accordingly, the step of positioning grids on the image can be performed on the image having one color spots. For such image, the step of determining a color distribution approximation function is not processed.

Besides, the filtering step can be performed on images having a plurality of color but which do not comprise spot patterns. For such multicolor image, the step of positioning grids is not performed on the image.

Advantageously, the step of positioning grids can be applied to experiments producing one image.

Advantageously, the linear regression filtering can be used before any other algorithm for spot quantification (block 102). Although linear regression algorithm itself generates a ratio estimate for the spots, it is not the only way for ratio estimation. A very representative group of methods utilizes principles of spot segmentation, where the foreground (i.e. signal)_pixels are separated from the background pixels based on some combined intensity-geometry criteria and an expression for the ratio estimate is introduced (similar to equation (9)). However, whatever algorithm for quantification is used, filtering should improve the estimation. After this filtering step, different algorithms for spot quantification provide more consistent results.

**Claims**

1. Method for analyzing an image (4) made of an array of pixels having an intensity in at least two color channels, some pixels of the image (4) having a high intensity and being grouped together to form spots (7, 8, 9), the other pixels of the image (4) having a low intensity reflecting the background of the image (4), **characterized in that** it comprises the following steps:

   - positioning (24, 28, 34, 36, 38, 40, 42) grids (6) partitioned into cells (16, 108, 110) on the image (4) in such a way that each spot (7, 8, 9) is localized in one cell (16, 108, 110) ; and
   - determining (96, 102) a color distribution approximation function ($R$) depending on the intensities of each color channel and of each spot (7, 8, 9), the intensities of each color channel being the intensities of the pixels contained in each cell (16, 108, 110) of each grid (6) positioned on the image (4).

2. Method according to claim 1, **characterized in that** each pixel is **characterized by** a n-bit byte (106, 118, 120, 122, 124) containing the intensities in each color channel, the step of determining (96, 102) the color distribution approximation function ($R$) comprising the following successive steps:

   - filtering (100) the cell (16, 108, 110) to exclude aberrant pixels selected according to a selection criteria implementing a distance between the color distribution approximation function (R) and the n-bite byte (106, 118, 120, 122, 124) of each selected pixel ; and
   - determining (96, 102) the color distribution approximation function (R) according to the intensities of each color channel of the filtered cell (16, 108, 110).

3. Method according to claim 2, a current intensity distribution being formed by n-bit bytes (106, 118, 120, 122, 124) of the pixels of one cell (16, 108, 110), **characterized in that** the step of filtering (100) the cell (16, 108, 110) comprises the successive following steps:

   a) selecting (126) at least one n-bit byte (106, 118, 120, 122, 124) of one pixel, in the current intensity distribution according to a predefined selection criteria ;
   b) extracting (127) the selected n-bit byte (106, 118, 120, 122, 124) from the current intensity distribution to build up a candidate intensity distribution ;
   c) estimating (130, 132) a first and a second evaluations of the current and of the candidate intensity distributions, respectively ; and
   d) considering (134) for further processing of the method, either the current intensity distribution or the candidate intensity distribution as the current intensity distribution, according to the first and the second evaluations ;
   e) repeating the steps a) - d) until a predetermined stop criterion is fulfilled and considering the current intensity distribution as the result of the filtering step (100).

4. Method according to claim 3, **characterized in that** the predetermined stop criterion is that the current intensity distribution is kept a predefined number of times during the step of considering (134) for further processing of the method.

5. Method according to any of claims 3 and 4, **characterized in that** the initial intensity distribution comprises the n-bit bytes (106, 118, 120, 122, 124) of all the pixels of the cell (16, 108, 110).

6. Method according to any of the claims 3 to 5, **characterized in that** the step of selecting (126) at least one n-bit byte (106, 118, 120, 122, 124) comprises the step of choosing at least one n-bit byte with a top intensity in at least one of color channels.

7. Method according to any of the claims 3 to 6, **characterized in that** the step of selecting (126) at least one n-bit byte (106, 118, 120, 122, 124) comprises the step of choosing at least one n-bit byte with the largest distance from the color distribution approximation function (R) of the current intensity distribution.

8. Method according to any of the claims 3 to 7, **characterized in that** the step of estimating (130, 132) the first and the second evaluations comprise the following steps:

    - calculating a first and a second color distribution approximation function (R) of the current and respectively the candidate intensity distributions ; and

    - calculating a first $\left(S_n^2\right)$ and a second $\left(S_{n-1}^2\right)$ residual variances of the first and of the second color distribution approximation function (R) as result of the first and the second evaluations.

9. Method according to any of the claims 3 in combination with claim 8, **characterized in that** the step of considering (134) the current intensity distribution or the candidate intensity distribution comprises the following steps :

    - calculating a ratio (F) of the first $\left(S_n^2\right)$ and of the second $\left(S_{n-1}^2\right)$ residual variances ; and

    - comparing the calculated ratio (F) to a predefined critical value (K), and if this ratio (F) is smaller than a critical value (K), the candidate intensity distribution is considered as the current intensity distribution.

10. Method according to any of the claims 8 and 9, **characterized in that** the n-bite byte (106, 118, 120, 122, 124) of each pixel contains the intensities in a first and in a second color channels, the step of determining the color distribution approximation function (R) comprises a step of determining (96, 102) a color ratio (R) between a characteristic value of the intensities of the first and of the second color channels of each pixel of the cell (16, 108, 110), the first and the second color distribution approximation function (R) being a first (114) and a second (138) linear regression lines of the current and the candidate intensity distributions, respectively.

11. Method according to any of the preceding claims, **characterized in that**, when applied to the analyzing of an image (4) built up by the superimposition of at least a first and a second images of biochips on which nucleic acid hybridization has occurred, the hybridization being detectable by at least a first and a second fluorescent labels that emit in a first and a second color channels respectively, each spot (7, 8, 9) reflecting the nucleic acid hybridization.

12. Method according to claim 11, **characterized in that** it comprises a step of shifting (98) at least the first image (4) with respect to the second image (4) to obtain the largest correlation between a predefined number of selected spots (7, 8, 9) of the first and of the second image (4).

13. Method according to claim 1, wherein the array of pixels is distributed according to columns and rows, the image (4) comprising patterns (2) of sports (7, 8, 9), **characterized in that** the step of positioning (24, 28, 34, 36, 38, 40, 42) grids comprising the following steps :

    - positioning (24, 28, 34, 36, 38, 40, 42) grid on each pattern (2) and positioning columns and rows in each grid (6) to delimit cells (16, 108, 110) in such a way that each grid (6) contains the spots (7, 8, 9) of one pattern (2) and each spot (7, 8, 9) of one pattern (2) is in a cell (16, 108, 110) of the associated grid ; and
    - calculating (14, 28, 34) for each row and column of pixels, a regularity curve (R (L, s)) representing the fluctuation of the intensity weighted by the amount of regularity in this row, and respectively in this column, the regularity curve depending on the distance separating two adjacent spots (7, 8, 9) and on an intensity level (L) of the image (4).

14. Method according to claim 13, **characterized in that** the positioning step (24, 28, 34, 36, 38, 40, 42) comprises a step of determining (48) the intensity level (L) of each row and of each column which maximizes the regularity curve (R (L, s)).

15. Method according to any of claims 13 and 14, **characterized in that** the positioning step (24, 28, 34, 36, 38, 40, 42) comprises the following steps :

    - considering an initial predetermined interdistance ($s_{xo}$, $s_{yo}$) as current interdistance ;
    - partitioning (28) the image (4) into blocks (30, 32), each block comprising a pattern (2) of spots (7, 8, 9) by computing the regularity curve ($R_x$ (L, s), $R_y$ (L, s)) for the image (4) for a current interdistance ($s_x$, $s_y$) ;
    - estimating (34) the interdistance ($s_{x30}$, $s_{y30}$) between pairs of adjacent spots (7, 8, 9) of each block (30, 32) by computing the regularity curve ($R_{x30}$ (L, s), $R_{y30}$ (L, s)) of each block (30, 32) for the current interdistance

$(S_x, S_y)$;

- repeating a predetermined number of times the steps of partitioning the image (28) and estimating (34) the interdistance $(s_{x30}, S_{y30})$ by

- calculating (36) the median value ($\overline{Sx30}$, $\overline{Sy30}$) of the estimated interdistances $(S_{x30}, S_{y30})$, and by

- considering the median value ($\overline{Sx30}$, $\overline{Sy30}$) as the current interdistance ; and

- considering the final interdistance of each block (30, 32) as the current interdistance after the predetermined number of times.

16. Method according to claim 15, **characterized in that** it comprises a step of estimating (24) the initial interdistance $(s_{x0}, s_{y0})$ for the image (4) comprising the following steps:

- setting (54) a set of potential regularity levels $(R_{xi}, R_{yj})$;
- for each potential regularity levels $(R_{xi}, R_{yj})$,

- calculating (56) refined values of interdistance $(s_{xi}, s_{yj})$,
- shifting (58) the regularity curve $(R_x(L, s), R_y(L, s))$ by each refined value of the interdistance $(s_{xi}, s_{yj})$,
- adding (60) the regularity curve $(R_x(L, s), R_y(L, s))$ to each shifted regularity curve $(R_x(L, s), R_y(L, s))$ to constitute blurred regularity profiles ; and
- selecting (64) among the potential regularity levels $(R_{xi}, R_{yj})$, the optimal regularity level $(R^*_x, R^*_y)$ as the regularity level ensuring the largest number of regions of the blurred regularity profile, having a regularity lower than the corresponding regularity level set $(R_{xi}, R_{yj})$ ; and
- calculating (66) the interdistance $(s_{x0}, s_{y0})$ for this image (4) for this optimal regularity levels $(R^*_x, R^*_y)$.

17. Computer program for a processing unit comprising a set of instructions which, when loaded into said processing unit, causes the processing unit to carry out the steps of the method as claimed in any of the claims 1 to 16.

18. Device for analyzing images made of an array of pixels, **characterized in that** it comprises a processing unit adapted to carry out the steps of the method as claimed in any of the claims 1 to 16.

4

FIG.1

6

4

FIG.2

FIG.3

Estimating $s_{xo}$, $s_{yo}$ for the image — 24

Partitioning the image into blocks — 28 ← Calculating median $\overline{Sxp}$ and $\overline{Syp}$ — 36

Estimating $s_{xp}$, $s_{yp}$ for each block p — 34

For each p

Controlling $s_{xp}$, $s_{yp}$ — 38 → Positioning the grid according to $s_{xp}$, $s_{yp}$ calculated for the neighborhood block — 42

Positioning the grid according to $s_{xp}$, $s_{yp}$ calculated for each block — 40

FIG.4

EP 1 703 464 A1

EP 1 703 464 A1

44 — Calculating $R_x(s_{y0})$, $R_y(s_{x0})$ for the all image

54 — Setting a set of levels $R_{xi}$, $R_{yj}$ from $\min(R_x(s_{y0}))$ to $\text{median}(R_x(s_{y0}))$, $\min(R_y(s_{x0}))$ to $\text{median}(R_y(s_{x0}))$ to obtain $R^*_x$, $R^*_y$

56 — Calculating the refined value of $s_{xi}$, $s_{yj}$, for each level $R_{xi}$, $R_{yj}$

58 — Shifting the profile $R_x(s_{y0})$, $R_y(s_{x0})$ by the newly obtained values $s_{xi}$, $s_{yj}$

60 — Constituting a blurred regularity profile

62 — Counting the number of dips in the blurred regularity profile

64 — Selecting the optimal level $R^*_x$, $R^*_y$

66 — Considering the correspondent $s_x$, $s_y$

FIG.5

FIG.6

EP 1 703 464 A1

46 — Preliminary estimation of $s_x = s_{xo}$, $s_y = s_{yo}$

48 — For each pixel column j (pixel row i), testing a set of intensity level $L_{coj}$, $L_{roi}$ from the interval $[I_{min}; I_{max}]$, maximizing $R_x(L_{coj}, s_{yo})$, $R_y(L_{roi}, s_{xo})$ to find $L^*_{coj}$, $L^*_{roi}$

50 — Computing the regularity parameter for each pixel column j (pixel row i) with $L^*_{coj}$, $L^*_{roi}$

52 — Building up $R_x(s_{yo})$, $R_y(s_{xo})$

## FIG.7

EP 1 703 464 A1

70 — Separating of the image into segments $B_{xi}$ ; $B_{yi}$

72 — Calculating $R_{Bxi}(s_y)$, $R_{Byj}(s_x)$ of each segment $B_{xi}$; $B_{yj}$ with $s_x$, $s_y$ estimated at step 66

74 — Calculating the position o f external borders $a_l$ , $a_r$ ; $a_r$ , $a_t$ , $a_b$ for each segment $B_{xi}$ ; $B_{yj}$

76 — Calculating the median value of the external borders $\overline{al}$, $\overline{ar}$, $\overline{at}$, $\overline{ab}$ of all segments $B_{xi}$, $B_{yj}$

78 — Defining the separator positions

80 — Partitioning the image into blocks 30, 32

FIG.8

**FIG.9**

**FIG.10**

**FIG.11**

**FIG.12**

```
┌──────────────────────────────────────────────────────────────────┐
82 ─│ For each block 30, 32, calculating $R_{x30}(s_y)$, $R_{y30}(s_x)$      │
└──────────────────────────────────────────────────────────────────┘
                              │
                              ▼
┌──────────────────────────────────────────────────────────────────┐
84 ─│ Finding the  threshold  regularity  level $R^*_{x30}$ ,$R^*_{y30}$ of the regularity │
│                  profile $R_{x30}(s_y)$, $R_{y30}(s_x)$                │
└──────────────────────────────────────────────────────────────────┘
                              │
                              ▼
┌──────────────────────────────────────────────────┐
86 ─│ Calculating $s_{x30}$, $s_{y30}$ for each pair of spots  │
└──────────────────────────────────────────────────┘
                              │
                              ▼
┌──────────────────────────────┐
88 ─│ Determining $\overline{e_{xi}}$, $\overline{e_{yj}}$       │
└──────────────────────────────┘
                              │
                              ▼
┌────────────────────────────────────────────────────┐
90 ─│ Calculating median value $\overline{e_{xi}}$, $\overline{e_{yj}}$ for each block  │
└────────────────────────────────────────────────────┘
                              │
                              ▼
┌──────────────────────────────┐
92 ─│ Controlling $s_{x30}$, $s_{y30}$        │
└──────────────────────────────┘
```

FIG.13

98 — Shifting

100 — Filtering the cell

102 — Determining the ratio R

96

# FIG.14

Fitting a regression line of a first distribution — 116

Selecting a pixel in the first distribution
126

127

Extracting the pixel selected to build up the second distribution

Estimating an evaluation of the first distribution — 130

Estimating an evaluation of the second distribution
132

Fitting a regression line of the seconde distribution — 129

Comparing the evaluation of the first and of the second distributions F > K? — 134

Yes

No

No substitution from one distribution to another one during the last 3 iterations?

No

Yes

136

EP 1 703 464 A1

FIG.15

FIG.16

FIG.17

EP 1 703 464 A1

**European Patent Office**

**EUROPEAN SEARCH REPORT**

Application Number

EP 05 29 0596

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | BERGEMANN T ET AL: "STATISTICAL ISSUES IN SIGNAL EXTRACTION FROM MICROARRAYS" PROCEEDINGS OF THE SPIE, SPIE, BELLINGHAM, VA, US, vol. 4266, 2001, pages 24-34, XP001156763 ISSN: 0277-786X * the whole document * | 1,11-14 | G06T7/00 |
| X | JAIN A N ET AL: "Fully Automatic Quantification of Microarray Image Data" GENOME RESEARCH, COLD SPRING HARBOR LABORATORY PRESS, US, vol. 12, February 2002 (2002-02), pages 325-332, XP002264187 ISSN: 1088-9051 * the whole document * | 1,11-14 | |
| X | BOWMAN C ET AL: "Automated analysis of gene-microarray images" IEEE CANADIAN CONFERENCE ON ELECTRICAL AND COMPUTER ENGINEERING. CCECE 2002. WINNIPEG, MANITOBA, CANADA, MAY 12 - 15, 2002, CANADIAN CONFERENCE ON ELECTRICAL AND COMPUTER ENGINEERING, NEW YORK, NY : IEEE, US, vol. VOL. 2 OF 3, 12 May 2002 (2002-05-12), pages 1140-1144, XP002264186 ISBN: 0-7803-7514-9 * the whole document * | 1,11-14 | TECHNICAL FIELDS SEARCHED (Int.Cl.7) G06T |

-/--

The present search report has been drawn up for all claims

| Place of search | Date of completion of the search | Examiner |
|---|---|---|
| Munich | 8 July 2005 | Rockinger, O |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

30

**European Patent Office**

## EUROPEAN SEARCH REPORT

Application Number

EP 05 29 0596

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | BRANDLE N ET AL: "Robust DNA microarray image analysis" MACHINE VISION AND APPLICATIONS SPRINGER-VERLAG GERMANY, vol. 15, no. 1, October 2003 (2003-10), pages 11-28, XP002335347 ISSN: 0932-8092 * page 14 - page 20 * | 1-7,11, 12 | |
| X | YANG Y H ET AL: "Analysis of cDNA microarray images." BRIEFINGS IN BIOINFORMATICS DEC 2001, vol. 2, no. 4, December 2001 (2001-12), pages 341-349, XP002335348 ISSN: 1467-5463 * the whole document * | 1,11 | |
| A | JIE CHEN ET AL: "How will bioinformatics impact signal processing research?" IEEE SIGNAL PROCESSING MAGAZINE IEEE USA, vol. 20, no. 6, November 2003 (2003-11), pages 16-26, XP002335349 ISSN: 1053-5888 * page 23 - page 24 * | | TECHNICAL FIELDS SEARCHED (Int.Cl.7) |

The present search report has been drawn up for all claims

| Place of search | Date of completion of the search | Examiner |
|---|---|---|
| Munich | 8 July 2005 | Rockinger, 0 |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................
& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PINKEL et al.** *Nature, 1998, Genetics,* 1998, vol. 20, 207-211
- **HEDGE et al.** *Biotechniques,* 2000, vol. 29, 548-562
- **KENDALL, M.G. ; STUART, A.** The Advanced Theory Of Statistics. McMillan, 1979, vol. 2
- **DISSANAIKE G. ; WANG, S.** *A critical examination of orthogonal regression,* 2003, http://ssrn.com/abstrac=407560